# EUROPEAN PATENT SPECIFICATION

(11) **EP 3 206 895 B1**
(45) Date of publication and mention of the grant of the patent: **18.11.2020**
(21) Application number: 15850144.5
(22) Date of filing: 01.10.2015
(51) Int. Cl.: B60C 23/00, B60C 19/00, B60C 3/00, B29D 30/00, B60C 15/00, B60C 15/06, B60C 13/00, B29D 30/50

(54) **TIRE HAVING EMBEDDED ELECTRONIC DEVICE AFFIXED WITH ADHESIVE**
REIFEN MIT EINGEBETTETER ELEKTRONISCHER VORRICHTUNG, DIE MIT KLEBSTOFF FIXIERT IST
PNEU AYANT UN DISPOSITIF ÉLECTRONIQUE INCORPORÉ FIXÉ AVEC UN ADHÉSIF

(30) Priority: 16.10.2014 US 201462064799 P
(43) Date of publication of application: 23.08.2017
(73) Proprietor: Bridgestone Americas Tire Operations, LLC, Nashville, TN 37201 (US)
(72) Inventor: RANDALL, Amy M., Akron, Ohio 44313 (US); WILSON, Paul B., Tallmadge, Ohio 44278 (US); WEI, Terrence E., Copley, Ohio 44321 (US); CORSAUT, William J., Uniontown, Ohio 44685 (US)
(74) Representative: Oxley, Robin John George
(86) International application number: PCT/US2015/053409
(87) International publication number: WO 2016/060851

(56) References cited:
- GB-A- 1 128 212
- US-A- 4 911 217
- US-A1- 2009 318 601
- US-A1- 2010 122 757
- US-A1- 2010 122 757
- US-A1- 2012 291 936
- US-A1- 2012 291 936
- US-B1- 6 705 365
- US-B2- 7 598 877
- US-B2- 8 430 142

## Description

### FIELD OF INVENTION

The present disclosure relates to the field of incorporating an electronic device in a tire. More specifically, the present disclosure relates to the field of embedding a radio frequency identification ("RFID") tag in a tire with an adhesive.

### BACKGROUND

Incorporation of an electronic device, such as an RFID tag, into a tire can occur during tire construction and before vulcanization or in a post-cure procedure. Such electronic devices have utility in transmitting data, such as tire-specific identification data, to an external reader. Ultra-high frequency ("UHF") tags are typically small and utilize flexible antennas for the transmission of data. During the manufacturing process, electronic devices may shift position or fall off of the tire. Additionally, air bubbles may form around the electronic device during vulcanization. Reference is also made to US 2009/318601, GB 1128212 and US 2012/291936.

### SUMMARY OF THE INVENTION

According to the invention there is provided a tire with the features of claim 1 and a method of embedding an electronic device in a tire as set out in claim 9.

Preferred embodiments are the subject matter of the dependent claims.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a cross section of an exemplary embodiment of a tire having an electronic device embedded therein; and
**Figure 2** is a schematic drawing of one embodiment of an electronic device.

### DETAILED DESCRIPTION

The following includes definitions of selected terms employed herein. The definitions include various examples or forms of components that fall within the scope of a term and that may be used for implementation. The examples are not intended to be limiting. Both singular and plural forms of terms may be within the definitions.

"Axial" and "axially" refer to a direction that is parallel to the axis of rotation of a tire.

"Bead" refers to the part of the tire that contacts the wheel and defines a boundary of the sidewall.

"Circumferential" and "circumferentially" refer to a direction extending along the perimeter of the surface of the tread perpendicular to the axial direction.

"Equatorial plane" refers to the plane that is perpendicular to the tire's axis of rotation and passes through the center of the tire's tread.

"Radial" and "radially" refer to a direction perpendicular to the axis of rotation of a tire.

"Sidewall" refers to that portion of the tire between the tread and the bead.

"Tread" refers to that portion of the tire that comes into contact with the road under normal inflation and load.

Directions are stated herein with reference to the axis of rotation of the tire.

The terms "upward" and "upwardly" refer to a general direction towards the tread of the tire, whereas "downward" and "downwardly" refer to the general direction towards the axis of rotation of the tire. Thus, when relative directional terms such as "upper" and "lower" or "top" and "bottom" are used in connection with an element, the "upper" or "top" element is spaced closer to the tread than the "lower" or "bottom" element. Additionally, when relative directional terms such as "above" or "below" are used in connection with an element, an element that is "above" another element is closer to the tread than the other element.

The terms "inward" and "inwardly" refer to a general direction towards the equatorial plane of the tire, whereas "outward" and "outwardly" refer to a general direction away from the equatorial plane of the tire and towards the sidewall of the tire. Thus, when relative directional terms such as "inner" and "outer" are used in connection with an element, the "inner" element is spaced closer to the equatorial plane of the tire than the "outer" element.

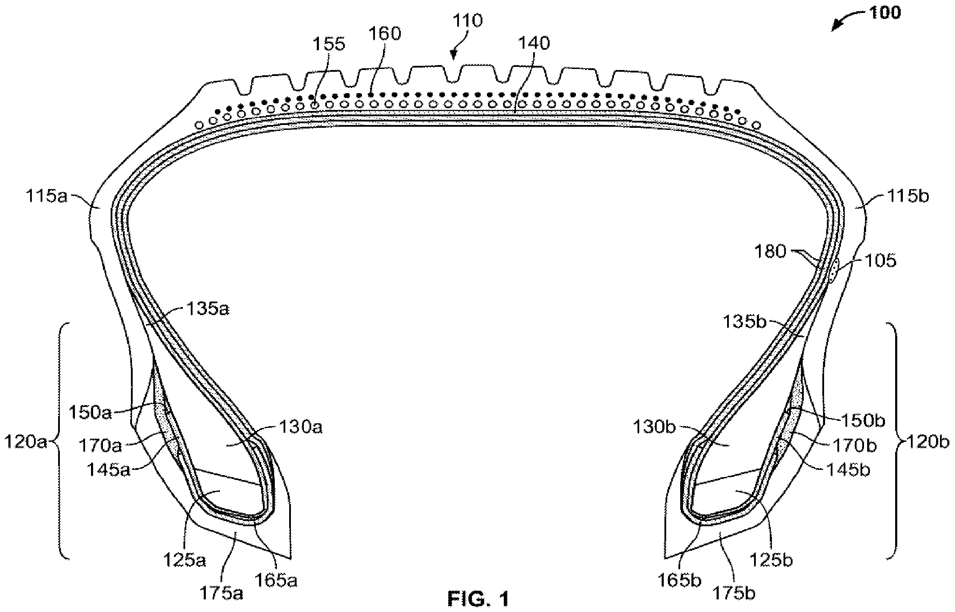

**Figure 1** illustrates a cross section of an exemplary tire **100** having an electronic device **105** embedded therein. In the illustrated embodiment, the tire **100** includes a circumferential tread formed of tread compound **110** and a pair of sidewalls formed of sidewall compound **115.** In one embodiment, the tread compound **110** is substantially the same as the sidewall compound **115.** In an alternative embodiment, the tread compound and the sidewall compound are different.

The pair of sidewalls includes a first sidewall formed of a first sidewall compound **115a** and a second sidewall formed of a second sidewall compound **115b.** In one embodiment, the first sidewall compound **115a** is the same as the second sidewall compound **115b.** The first sidewall compound **115a** extends from a first bead region **120a** to the tread compound **110.** The second sidewall compound **115b** likewise extends from a second bead region **120b** to the tread compound **110.** Each bead region includes a bead **125a,b** and a bead filler **130a,b** having an apex **135a,b.** In an alternative embodiment (not shown), the bead filler does not have an apex.

The tire **100** further includes a body ply **140** extending from the first bead region **120a** to the second bead region **120b.** While only a single body ply **140** is shown in the illustrated embodiment, it should be understood that two or more body plies may be employed.

The body ply **140** wraps around each of the beads **125a,b,** thereby forming a first turn up portion **145a** and a second turn up portion **145b.** The first turn up portion **145a** terminates at a first turn up end **150a** located axially outside of the first bead filler **130a** and radially below the apex **135a** of the first bead filler **130a.** Likewise, the second turn up portion **145b** terminates at a second turn up end **150b** located axially outside of the second bead filler **130b** and radially below the apex **135b** of the second bead filler **130a.** In an alternative embodiment (not shown), each turn up portion terminates above the apex of the respective bead filler. In one specific embodiment, the turn up portion terminates in a crown region of the tire.

In the illustrated embodiment, the tire **100** further includes a belt **155** and a cap ply **160.** In an alternative embodiment (not shown), the tire may include two or more belts. In another alternative embodiment (not shown), the tire may include two or more cap plies. In yet another alternative embodiment (not shown), the cap ply may be omitted.

In the illustrated embodiment, the tire **100** further includes a first wire reinforcement **165a** in the first bead region **120a** and a second wire reinforcement **165b** in the second bead region **120b.** Each wire reinforcement **165a,b** wraps around the respective bead **125a,b** and part of the respective bead filler **130a,b** and body ply **140.** The wire reinforcements **165a,b** may provide a structural reinforcement to the tire **100**, or it may protect the body ply **140** from abrasion. However, it should be understood that the wire reinforcements **165a,b** need not serve such functions. In an alternative embodiment (not shown), the wire reinforcement may be omitted.

The tire **100** also includes a pair of reinforcement fillers **170**, including a first reinforcement filler **170a** located axially outside of the first bead filler **130a** and a second reinforcement filler **170b** located axially outside of the second bead filler **130b.** In an alternative embodiment (not shown), the reinforcement filler is omitted.

The tire **100** further includes a pair of abrasion portions **175**, including a first abrasion portion **175a** and a second abrasion portion **175b.** Each abrasion portion **175** at least partially wraps around a bead **125** and bead filler **130** such that each abrasion portion includes a first portion disposed axially outside a respective bead filler **130**, reinforcement filler **170**, and turn up portion **145** of the body ply **140.** Each abrasion portion **175** further includes a second portion disposed below a respective bead **125.** In an alternative embodiment (not shown), the abrasion portion is omitted, and the sidewall compound **115** extends into the bead region **120** and around the bead **125.**

In the illustrated embodiment, a pair of inner liners **180** extends along the interior of the tire from the first bead region **120a** to the second bead region **120b.** One or both of the inner liners **180** is constructed of a material having low permeability, such that the inner liner **180** contains pressurized air within the tire cavity. In an alternative embodiment (not shown), a single inner liner is employed. In another alternative embodiment (not shown) the inner liners are omitted.

The electronic device **105** is embedded in the tire **100.** In other words, the electronic device **105** is disposed between the inner liner **180** and the sidewall compound **115**, such that it is not visible on the exterior of the tire or on the interior of the tire. In the illustrated embodiment, the electronic device **105** is disposed in the second sidewall region **115b** at a location radially above the apex **135b** of the second bead filler **130b** and axially outside the body ply **140.** The electronic device **105** is shown as sandwiched between the main portion of the body ply **140** and the second sidewall compound **115b.** However, it should be understood that the electronic device may be disposed between any two layers of the tire. For example, in one embodiment (not shown) the electronic device may be sandwiched between an inner liner and a body ply. In an alternative embodiment (not shown), the electronic device may be sandwiched between a reinforcement filler and an abrasion portion. In another alternative embodiment (not shown), the electronic device may be sandwiched between a body ply and a bead filler. In yet another alternative embodiment (not shown) the electronic device may be sandwiched between two body plies. In still another alternative embodiment (not shown), the electronic device may be sandwiched between a bead filler and sidewall rubber. The above described embodiments should not be taken as limiting, as the electronic device may be embedded at any location on the tire.

While the illustrated embodiment shows the electronic device 105 disposed on the right side of the tire **100**, it should be understood that the electronic device may be disposed on either side of the tire. It should be further understood that a tire could have multiple electronic devices. For example, in one embodiment one device is disposed on each side of the tire. In another alternative embodiment, one device is disposed in a sidewall region and another device is disposed in a crown region of a tire. However, any number of devices may be located in any number of locations in the tire.

In an alternative embodiment (not shown), the bead region further includes one or more chafers that at least partially wrap around the bead and bead filler. In other words, the chafer may include a first portion disposed axially outside the bead and the bead filler, and a second portion disposed below the bead.

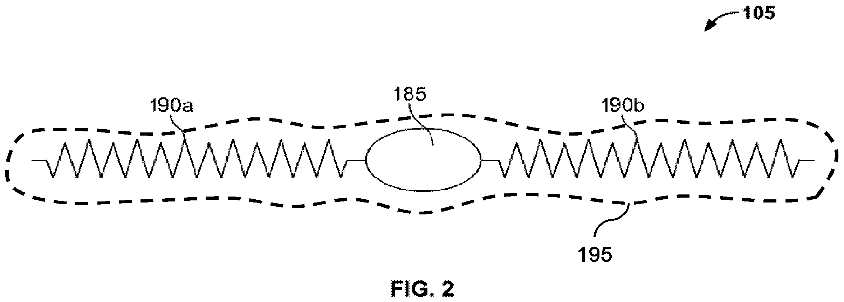

**Figure 2** is a schematic drawing of one embodiment of an electronic device **105.** In the illustrated embodiment, the electronic device **105** is an RFID tag having a passive RFID transponder **185** and a pair of antennae **190a,b** forming a dipole. In one embodiment, the electronic device **105** is oriented in a substantially circumferential direction. It should be understood, that the illustrated embodiment is merely exemplary, and any electronic device may be employed.

In the illustrated embodiment, the RFID tag **105** is encapsulated in an adhesive **195.** In one embodiment, the adhesive **195** is a solvent-based adhesive and includes at least one of natural rubber, styrene butadiene rubber, and butadiene rubber. In such an embodiment, the solvent-based adhesive may include filler and curative dissolved in a volatile organic liquid. In an alternative embodiment, the adhesive **195** is a water-based adhesive, and includes at least one of natural rubber, styrene butadiene rubber, and butadiene rubber. In such an embodiment, the water-based adhesive may include filler and curatives suspended in an aqueous media. The adhesive may be a non-imide-based adhesive and non-acrylic.

The adhesive **195** may be a non-pressure sensitive adhesive. For example, the adhesive **195** may be a curable adhesive. Such a curable adhesive may crosslink with a layer of the tire during vulcanization of the tire.

To embed the electronic device **105** into the tire **100**, a tire carcass is formed by providing the pair of bead portions **120** and the body ply **140.** A portion of the body ply **140** is wrapped around each of the pair of bead portions **120.** The electronic device **105** is encapsulated with an adhesive **195**, such as one of the adhesives described above. The electronic device **105** is affixed to a desired location during the building of the tire carcass. A green tire is formed by providing sidewall compound **115** and a tread compound **110** on the tire carcass. The green tired is cured in a vulcanization mold.

As explained above, the electronic device may be affixed to the inner liner **180**, the body ply **140**, or a bead portion **120**, including any of the bead portion components described above. In one embodiment, the adhesive **195** has a composition substantially similar to that of the tire layer to which the electronic device **105** is affixed. In such an embodiment, curing the green tire causes the adhesive **195** to crosslink with the tire carcass. However, as one of ordinary skill in the art would understand, the adhesive may crosslink with the tire carcass even if it has a composition that is not substantially the same as that of the tire layer to which the electronic device is affixed.

As the Examples below show, the adhesive described herein is well-suited for use in the manufacture of a tire having an embedded device.

### Examples

Peel strength measurements were performed to test the strength and durability of the solvent-based adhesives in comparison to a stock to stock control, and/or against other adhesives. In the examples below, rubber strips and adhesion pads were constructed with several rubber compositions for tire body components, such as tire sidewalls, nylon chafer skims, innerliners, treads, and belt skim. For the adhesive, a foam/sponge brush was used to apply the refresh agent in a thin, uniform layer onto the face of the adhesion pad. It was observed that not all of the adhesives coated and wetted each of the rubber surfaces well. The adhesion pads were dried at room temperature for 5 minutes when no visible wetness was apparent. The application volume of adhesives in each Example was approximately the same.

In Examples 1-13 uncured rubber strips were joined to the coated rubber on the adhesion pad. The joined rubber strips were tested by a standard procedure for 180° peel testing on an Instron 5565. These Examples were peel tested at a rate of 2 in/min and the gap distance was about 80 mm. In each case the higher force indicates the stronger bond.

In Examples 14-26, uncured rubber strips were joined to the coated, uncured rubber on the adhesion pad and the samples were cured at 170°C for 15 minutes. The cured peel strength measurement primarily shows the strength and durability of the bond of the cured rubber components. The joined and cured rubber strips and adhesion pads were tested by a standard procedure for 180° peel testing on an Instron 5565. These Examples were peel tested at a rate of 2 in/min and the gap distance was 30 mm. In each case the higher force indicates the stronger bond.

The results of these tests are shown in the tables below.

**Table 1 - Uncured Sidewall Compound**

| **Example** | **Adhesive** | **Ave Force (N)** | **Uncertainty** | **Max Force (N)** | **Uncertainty** |
|---|---|---|---|---|---|
| 1 | None (Control) | 34.4 | 3.4 | 43.5 | 4.3 |
| 2 | Solvent Based | 50.9 | 5.1 | 57.8 | 5.8 |

**Table 2 - Uncured Nylon Chafer Skim Compound**

| **Example** | **Adhesive** | **Ave Force (N)** | **Uncertainty** | **Max Force (N)** | **Uncertainty** |
|---|---|---|---|---|---|
| 3 | None (Control) | 25.6 | 2.6 | 41.8 | 4.2 |
| 4 | Solvent Based | 58.9 | 5.9 | 89.7 | 9.0 |

**Table 3 - Uncured Innerliner Compound**

| **Example** | **Adhesive** | **Ave Force (N)** | **Uncertainty** | **Max Force (N)** | **Uncertainty** |
|---|---|---|---|---|---|
| 5 | None (Control) | 6.6 | 0.7 | 11 | 1.1 |
| 6 | Solvent Based | 7.3 | 0.7 | 10.4 | 1.0 |

**Table 4 - Uncured Tread Compound**

| **Example** | **Adhesive** | **Ave Force (N)** | **Uncertainty** | **Max Force (N)** | **Uncertainty** |
|---|---|---|---|---|---|
| 7 | None (Control) | 29.1 | 2.9 | 42.2 | 4.2 |
| 8 | Solvent Based | 62.0 | 6.2 | 84.3 | 8.4 |
| 9 | Water Based | 47.2 | 4.7 | 51.4 | 5.1 |

**Table 5 - Uncured Belt Skim Compound**

| **Example** | **Adhesive** | **Ave Force (N)** | **Uncertainty** | **Max Force (N)** | **Uncertainty** |
|---|---|---|---|---|---|
| 10 | Solvent Based | 106.8 | 1.9 | 151.0 | 29.7 |
| 11 | Chemlock 6254 | 14.2 | 2.7 | 15.8 | 10.7 |
| 12 | Chemlock 6411 | 61.7 | 20.4 | 102.6 | 20.1 |
| 13 | Acrylic | 2.2 | 0.5 | 4.3 | 2.0 |

**Table 6 - Cured Sidewall Compound**

| **Example** | **Adhesive** | **Ave Force (N)** | **Uncertainty** | **Max Force (N)** | **Uncertainty** |
|---|---|---|---|---|---|
| 14 | None (Control) | 572.8 | 57.3 | 1174.1 | 117.4 |
| 15 | Solvent Based | 831.5 | 83.1 | 1047.6 | 104.8 |

**Table 7 - Cured Nylon Chafer Skim Compound**

| **Example** | **Adhesive** | **Ave Force (N)** | **Uncertainty** | **Max Force (N)** | **Uncertainty** |
|---|---|---|---|---|---|
| 16 | None (Control) | 569.8 | 57.0 | 1118.8 | 111.9 |
| 17 | Solvent Based | 675.4 | 67.5 | 1080.0 | 108.0 |

**Table 8 - Cured Innerliner Compound**

| **Example** | **Adhesive** | **Ave Force (N)** | **Uncertainty** | **Max Force (N)** | **Uncertainty** |
|---|---|---|---|---|---|
| 18 | None (Control) | 566.7 | 56.7 | 667.6 | 66.8 |
| 19 | Solvent Based | 469.5 | 46.9 | 504.3 | 50.4 |

**Table 9 - Cured Tread Compound**

| **Example** | **Adhesive** | **Ave Force (N)** | **Uncertainty** | **Max Force (N)** | **Uncertainty** |
|---|---|---|---|---|---|
| 20 | None (Control) | 384.2 | 38.4 | 585.1 | 58.5 |
| 21 | Solvent Based | 472.9 | 47.3 | 654.4 | 65.4 |
| 22 | Water Based | 430.9 | 43.1 | 529.1 | 52.9 |

**Table 10 - Cured Belt Skim Compound**

| **Example** | **Adhesive** | **Ave Force (N)** | **Uncertainty** | **Max Force (N)** | **Uncertainty** |
|---|---|---|---|---|---|
| 23 | Solvent Based | 874.5 | 99.2 | 1613.8 | 210.3 |
| 24 | Chemlock 6254 | 539.1 | 3.7 | 713.5 | 26.5 |
| 25 | Chemlock 6411 | 449.8 | 79.8 | 662.2 | 181.4 |
| 26 | Acrylic | 138.8 | 149.3 | 457.0 | 426.6 |

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

## Claims

1. A tire (100) comprising:
an inner liner (180);
a circumferential tread (110);
a pair of sidewalls (115a, 115b), each sidewall including an outer rubber layer;
a pair of bead portions (120a, 120b), each bead portion including a bead (125a, 125b) and a bead filler (130a, 130b) having an apex (135a, 135b);
at least one body ply (140) extending from bead (125a) to bead (125b),
wherein at least a portion of the body ply (140) is disposed between the inner liner (180) and the outer rubber layer of each sidewall (115a, 115b);
wherein the body ply (140) includes a pair of turn up portions (145a, 145b), each turn up portion having a turn up end (150a, 150b) axially outside of a respective bead (120a, 120b) and radially below the apex (135a, 135b) of a respective bead filler (130a, 130b);
an electronic device (105) disposed between the inner liner (180) and the outer rubber layer of one of the pair of sidewalls (115a, 115b), **characterised in that** the electronic device (105) is encapsulated in an adhesive (195), wherein the adhesive is one of a solvent-based adhesive and a water-based adhesive (195), and wherein the adhesive (195) includes at least one of natural rubber, styrene butadiene rubber, and butadiene rubber.

2. The tire (100) of claim 1, wherein the adhesive (195) is a non-pressure sensitive adhesive.

3. The tire (100) of claim 1, wherein the adhesive (195) is a solvent-based adhesive (195) including filler and curative dissolved in a volatile organic liquid.

4. The tire (100) of claim 1, wherein the adhesive (195) is a water-based adhesive (195) including filler and curative suspended in an aqueous media.

5. The tire (100) of claim 1, further comprising a pair of chafers, each chafer at least partially wrapping around one of the pair of bead portions (145a, 145b).

6. The tire (100) of claim 1, further comprising a pair of abrasion portions (175a, 175b), each abrasion portion (175a, 175b) at least partially wrapping around one of the pair of bead portions (120a, 120b).

7. The tire (100) of claim 1, wherein the at least one electronic device (105) is a radio frequency identification tag (185).

8. The tire (100) of claim 1, further comprising a pair of wire reinforcements (165a, 165b), each wire reinforcement (165a, 165b) wrapping around one of the pair of bead portions (120a, 120b).

9. A method of embedding an electronic device (105) in a tire (100), the method comprising:
forming a tire carcass by:
providing a pair of bead portions (120a, 120b), each bead portion (120a, 120b) including a bead (125) and a bead filler (130a, 130b),
providing a body ply (140), and
wrapping a portion of the body ply (140) around each of the pair of bead portions (120a, 120b);
providing an electronic device (105);
encapsulating the electronic device (105) with an adhesive (195) selected from the group consisting of a solvent-based adhesive and a water-based adhesive, wherein the adhesive (195) includes at least one of natural rubber, styrene butadiene rubber, and butadiene rubber;
affixing the electronic device (105) to the tire carcass;
forming a green tire (100) by providing sidewall compound (115a, 115b) and a tread compound (110) on the tire carcass; and
curing the green tire.

10. The method of claim 9, wherein the affixing the electronic device (105) to the tire carcass include affixing the electronic device (105) to the body ply (140).

11. The method of claim 9, wherein the affixing the electronic device (105) to the tire carcass include affixing the electronic device (105) to one of the pair of bead portions (120a, 120b).

12. The method of claim 9, wherein the forming a tire carcass includes providing an inner liner (180).

13. The method of claim 12, wherein the affixing the electronic device (105) to the tire carcass include affixing the electronic device (105) to the inner liner (180).

14. The method of claim 9, wherein the adhesive (195) is a non-acrylic adhesive.

15. The method of claim 9, wherein the curing the green tire causes the adhesive (195) to crosslink with the tire carcass.

## Patentansprüche

1. Reifen (100), umfassend:
eine innere Einlage (180);
eine Umfangslauffläche (110);
ein Paar Seitenwände (115a, 115b), wobei jede Seitenwand eine äußere Kautschukschicht einschließt;
ein Paar Wulstabschnitte (120a, 120b), wobei jeder Wulstabschnitt eine Wulst (125a, 125b) und einen Wulstfüller (130a, 130b) mit einem Kernreiter (135a, 135b) einschließt;
mindestens eine Karkassenlage (140), die sich von Wulst (125a) zu Wulst (125b) erstreckt,
wobei mindestens ein Abschnitt der Karkassenlage (140) zwischen der inneren Einlage (180) und der äußeren Kautschukschicht jeder Seitenwand (115a, 115b) angeordnet ist;
wobei die Karkassenlage (140) ein Paar Umschlagabschnitte (145a, 145b) umfasst, wobei jeder Umschlagabschnitt ein Umschlagende (150a, 150b) axial außerhalb eines jeweiligen Wulstes (120a, 120b) und radial unterhalb des Kernreiters (135a, 135b) eines jeweiligen Wulstfüllers (130a, 130b) aufweist;
eine elektronische Vorrichtung (105), die zwischen der inneren Einlage (180) und der äußeren Kautschukschicht von einem des Paars Seitenwände (115a, 115b) angeordnet ist, **dadurch gekennzeichnet, dass** die elektronische Vorrichtung (105) in einem Klebstoff (195) eingekapselt ist, wobei der Klebstoff einer von einem auf einem Lösungsmittel basierenden Klebstoff und einem auf Wasser basierenden Klebstoff (195) ist, und wobei der Klebstoff (195) mindestens einen vom Naturkautschuk, Styrol-Butadien-Kautschuk und Butadien-Kautschuk einschließt.

2. Reifen (100) nach Anspruch 1, wobei der Klebstoff (195) ein nichtdruckempfindlicher Klebstoff ist.

3. Reifen (100) nach Anspruch 1, wobei der Klebstoff (195) ein auf einem Lösungsmittel basierender Klebstoff (195) ist, der Füllstoff und Härtungsmittel einschließt, die in einer flüchtigen organischen Flüssigkeit gelöst sind.

4. Reifen (100) nach Anspruch 1, wobei der Klebstoff (195) ein auf Wasser basierender Klebstoff (195) ist, der Füllstoff und Härtungsmittel einschließt, die in einem wässrigen Medium suspendiert sind.

5. Reifen (100) nach Anspruch 1, ferner ein Paar Wulstschutzstreifen umfassend, wobei sich jeder Wulstschutzstreifen mindestens teilweise um eines des Paars Wulstabschnitte (145a, 145b) wickelt.

6. Reifen (100) nach Anspruch 1, ferner ein Paar Abriebabschnitte (175a, 175b) umfassend, wobei sich jeder Abriebabschnitt (175a, 175b) mindestens teilweise um einen des Paars Wulstabschnitte (120a, 120b) wickelt.

7. Reifen (100) nach Anspruch 1, wobei die mindestens eine elektronische Vorrichtung (105) ein Radiofrequenzidentifikationsetikett (185) ist.

8. Reifen (100) nach Anspruch 1, ferner ein Paar Drahtverstärkungen (165a, 165b) umfassend, wobei sich jede Drahtverstärkung (165a, 165b) um eines des Paars Wulstabschnitte (120a, 120b) wickelt.

9. Verfahren zum Einbetten einer elektronischen Vorrichtung (105) in einen Reifen (100), wobei das Verfahren umfasst:
Bilden einer Reifenkarkasse durch:
Bereitstellen eines Paars Wulstabschnitte (120a, 120b), wobei jeder Wulstabschnitt (120a, 120b) eine Wulst (125) und einen Wulstfüller (130a, 130b) einschließt, Bereitstellen einer Karkassenlage (140), und
Wickeln eines Abschnitts der Karkassenlage (140) um jedes des Paars Wulstabschnitte (120a, 120b);
Bereitstellen einer elektronischen Vorrichtung (105);
Einkapseln der elektronischen Vorrichtung (105) mit einem Klebstoff (195), ausgewählt aus der Gruppe bestehend aus einem auf einem Lösungsmittel basierenden Klebstoff und einem auf Wasser basierenden Klebstoff, wobei der Klebstoff (195) mindestens einen vom Naturkautschuk, Styrol-Butadien-Kautschuk und Butadien-Kautschuk einschließt;
Befestigen der elektronischen Vorrichtung (105) an der Reifenkarkasse;
Bilden eines Reifenrohlings (100) durch Bereitstellen einer Seitenwandverbindung (115a, 115b) und einer Laufflächenverbindung (110) auf der Reifenkarkasse; und
Vulkanisieren des Reifenrohlings.

10. Verfahren nach Anspruch 9, wobei das Befestigen der elektronischen Vorrichtung (105) an der Reifenkarkasse das Befestigen der elektronischen Vorrichtung (105) an der Karkassenlage (140) einschließt.

11. Verfahren nach Anspruch 9, wobei das Befestigen der elektronischen Vorrichtung (105) an der Reifenkarkasse das Befestigen der elektronischen Vorrichtung (105) an einem des Paars Wulstabschnitte (120a, 120b) einschließt.

12. Verfahren nach Anspruch 9, wobei das Bilden einer Reifenkarkasse das Bereitstellen einer inneren Einlage (180) einschließt.

13. Verfahren nach Anspruch 12, wobei das Befestigen der elektronischen Vorrichtung (105) an der Reifenkarkasse das Befestigen der elektronischen Vorrichtung (105) an der inneren Einlage (180) einschließt.

14. Verfahren nach Anspruch 9, wobei der Klebstoff (195) ein nichtacrylischer Klebstoff ist.

15. Verfahren nach Anspruch 9, wobei das Vulkanisieren des Reifenrohlings bewirkt, dass der Klebstoff (195) mit der Reifenkarkasse vernetzt.

## Revendications

1. Pneu (100) comprenant :
un revêtement interne (180) ;
une bande de roulement circonférentielle (110) ;
une paire de flancs (115a, 115b), chaque flanc incluant une couche de caoutchouc externe ;
une paire de parties de talon (120a, 120b), chaque partie de talon incluant un talon (125a, 125b) et un bourrage sur tringle (130a, 130b) ayant un point culminant (135a, 135b) ;
au moins une nappe carcasse (140) s'étendant du talon (125a) au talon (125b),
dans lequel au moins une partie de la nappe carcasse (140) est disposée entre le revêtement interne (180) et la couche de caoutchouc externe de chaque flanc (115a, 115b) ;
dans lequel la nappe carcasse (140) inclut une paire de parties repliées (145a, 145b), chaque partie repliée ayant une extrémité repliée (150a, 150b) axialement à l'extérieur d'un talon respectif (120a, 120b) et radialement en dessous du point culminant (135a, 135b) d'un bourrage sur tringle respectif (130a, 130b) ;
un dispositif électronique (105) disposé entre le revêtement interne (180) et la couche de caoutchouc externe de l'un parmi la paire de flancs (115a, 115b), **caractérisé en ce que** le dispositif électronique (105) est encapsulé dans un adhésif (195), dans lequel l'adhésif est l'un parmi un adhésif à base de solvant et un adhésif à base d'eau (195), et dans lequel l'adhésif (195) inclut au moins l'un parmi du caoutchouc naturel, du caoutchouc butadiène-styrène, et du caoutchouc butadiène.

2. Pneu (100) selon la revendication 1, dans lequel l'adhésif (195) est un adhésif non sensible à la pression.

3. Pneu (100) selon la revendication 1, dans lequel l'adhésif (195) est un adhésif à base de solvant (195) incluant une charge et un agent de durcissement dissous dans un liquide organique volatil.

4. Pneu (100) selon la revendication 1, dans lequel l'adhésif (195) est un adhésif à base d'eau (195) incluant une charge et un agent de durcissement en suspension dans un milieu aqueux.

5. Pneu (100) selon la revendication 1, comprenant en outre une paire de bandelettes talons, chaque bandelette talon s'enveloppant au moins partiellement autour de l'une parmi la paire de parties de talon (145a, 145b).

6. Pneu (100) selon la revendication 1, comprenant en outre une paire de parties d'abrasion (175a, 175b), chaque partie d'abrasion (175a, 175b) s'enveloppant au moins partiellement autour de l'une parmi la paire de parties de talon (120a, 120b).

7. Pneu (100) selon la revendication 1, dans lequel l'au moins un dispositif électronique (105) est une étiquette d'identification par radiofréquence (185).

8. Pneu (100) selon la revendication 1, comprenant en outre une paire de renforts câblés (165a, 165b), chaque renfort câblé (165a, 165b) s'enveloppant autour d'une parmi la paire de parties de talon (120a, 120b).

9. Procédé d'encastrement d'un dispositif électronique (105) dans un pneu (100), le procédé comprenant :
la formation d'une carcasse de pneu par :
la fourniture d'une paire de parties de talon (120a, 120b), chaque partie de talon (120a, 120b) incluant un talon (125) et un bourrage sur tringle (130a, 130b),
la fourniture d'une nappe carcasse (140), et
l'enveloppement d'une partie de la nappe carcasse (140) autour de chacune parmi la paire de parties de talon (120a, 120b) ;
la fourniture d'un dispositif électronique (105) ;
l'encapsulation du dispositif électronique (105) avec un adhésif (195) choisi dans le groupe constitué d'un adhésif à base de solvant et d'un adhésif à base d'eau, dans lequel l'adhésif (195) inclut au moins l'un parmi du caoutchouc naturel, du caoutchouc butadiène-styrène, et du caoutchouc butadiène ;
la fixation du dispositif électronique (105) à la carcasse de pneu ;
la formation d'un pneu cru (100) en fournissant un composé de flanc (115a, 115b) et un composé de bande de roulement (110) sur la carcasse de pneu ; et
le durcissement du pneu cru.

10. Procédé selon la revendication 9, dans lequel la fixation du dispositif électronique (105) à la carcasse de pneu inclut la fixation du dispositif électronique (105) à la nappe carcasse (140).

11. Procédé selon la revendication 9, dans lequel la fixation du dispositif électronique (105) à la carcasse de pneu inclut la fixation du dispositif électronique (105) à l'une parmi la paire de parties de talon (120a, 120b).

12. Procédé selon la revendication 9, dans lequel la formation d'une carcasse de pneu inclut la fourniture d'un revêtement interne (180).

13. Procédé selon la revendication 12, dans lequel la fixation du dispositif électronique (105) à la carcasse de pneu inclut la fixation du dispositif électronique (105) au revêtement interne (180).

14. Procédé selon la revendication 9, dans lequel l'adhésif (195) est un adhésif non acrylique.

15. Procédé selon la revendication 9, dans lequel le durcissement du pneu cru amène l'adhésif (195) à réticuler avec la carcasse de pneu.
